# EUROPEAN PATENT SPECIFICATION

(11) **EP 2 300 783 B1**
(45) Date of publication and mention of the grant of the patent: **24.02.2016**
(21) Application number: 09780396.9
(22) Date of filing: 09.07.2009
(51) Int. Cl.: G01D 5/42

(54) **METHOD FOR THERMALLY COMPENSATING A GAGING DEVICE AND THERMALLY COMPENSATED GAGING STATION**
VERFAHREN ZUR WÄRMEKOMPENSATION EINER EICHVORRICHTUNG UND WÄRMEKOMPENSIERTE EICHSTATION
PROCÉDÉ DE COMPENSATION THERMIQUE D'UN DISPOSITIF DE MESURE ET POSTE DE MESURE À COMPENSATION THERMIQUE

(30) Priority: 11.07.2008 IT BO20080432
(43) Date of publication of application: 30.03.2011
(73) Proprietor: Marposs Societa' Per Azioni, 40010 Bentivoglio (BO) (IT)
(72) Inventor: ZANETTI, Bruno, I-40051 Malalbergo (BO) (IT); ALDROVANDI, Matteo, I-40132 Bologna (IT); MONTANARI, William, I-40013 Castel Maggiore Bo (IT)
(86) International application number: PCT/EP2009/058774
(87) International publication number: WO 2010/004011

(56) References cited:
- US-B1- 7 030 604
- US-B2- 6 931 749

## Description

### Technical Field

The present invention relates to a method for thermally compensating a gaging device, and to a thermally compensated gaging station.

### Background Art

The information provided by a gaging device such as a position sensor is affected, among other things, by the environmental temperature, since a temperature variation causes so-called thermal drifts caused by both unavoidable thermal deformations in the metal component parts of the position sensor, and unavoidable variations in the electrical resistance of the electric circuits of the position sensor. For attempting to render the sensor less sensitive to the temperature variations, the position sensor can be implemented with materials having limited thermal deformations and limited electrical resistance variations. However, it is not possible to obtain a gaging device which be totally insensitive to the effects of the temperature variations.

In the high accuracy gaging devices and sensors it is known to carry out a compensation of the reading provided by the sensor as a function of the environmental temperature. For example, US patent US5689447A1 discloses a gage head or position sensor of the LVDT type, i.e. including an "LVDT" (Linear Variable Differential Transformer") inductive transducer, wherein there occurs a thermal compensation of the reading provided by the sensor which takes into consideration the influence of the environmental temperature. US patents US6844720B1 and US6931749B2 discloses further examples of thermal compensation of a position sensor of the LVDT type.

However, the known methods (for example of the same type as the one described in patent US5689447A1) for determining the value of the thermal compensation coefficient involve quite remarkable approximations, and thus they do not enable to achieve a very accurate compensation. As a consequence, the known methods can not be applied to gaging applications requiring an extremely high accuracy.

### Disclosure of the Invention

Object of the present invention is to provide a method for thermally compensating a gaging device and a thermally compensated gaging station, which method and station do not present the above described disadvantages and can be easily and cheaply implemented.

According to the present invention there are provided a method for thermally compensating a gaging device and a thermally compensated gaging station according to what is claimed in the accompanying claims.

### Brief description of the drawings

The present invention is now described with reference to the enclosed sheets of drawings, given by way of non limiting example, wherein:
- figure 1 is a simplified front view, with some parts removed for sake of clarity, of a calibration station for a thermally compensated position sensor;
- figure 2 is a simplified side view, with some parts removed for sake of clarity, of the calibration station of figure 1;
- figure 3 is a graph showing the time variation of the temperature of a position sensor which is located in the calibration station of figure 1 during a phase of determining the value of a thermal compensation coefficient, and
- figure 4 is a three dimensional graph showing an example of the values taken by a thermal compensation coefficient.

### Best mode for carrying out the invention

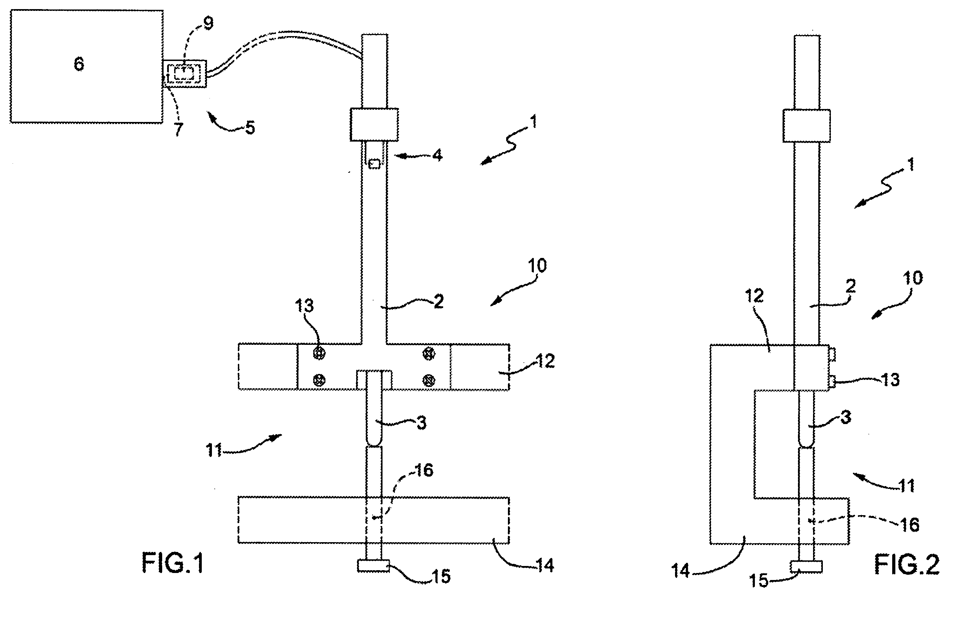

In figure 1, the reference number **1** indicates, on the whole, a gaging device, e.g. a position sensor including a linear transducer of the LVDT (Linear Variable Differential Transformer) type, for instance of the same type as the one described in US patent US6931749B1. The gaging device or position sensor **1** includes a stationary part **2** and a movable element, more specifically a slider **3,** which carries a feeler and is movable with respect to the stationary part. The transducer of the position sensor **1** includes windings and a movable core (per se known and thus not illustrated in the attached sheets of drawings), connected to the stationary part **2** and to the movable element or slider **3,** respectively, and is adapted for providing an alternating electrical signal which has a variable intensity voltage and depends on the position of the movable slider **3.** The windings of the transducer of the position sensor **1** are part of an electric circuit which is schematically shown in figure 1 with the reference number **4,** is fed with an alternating electrical voltage, and has a variable inductance depending on the position of the movable slider **3.**

The position sensor **1** includes a coupling cable and an electrical connector **5,** which is employed for forming an electrical connection between the transducer and a gaging unit **6** being adapted to detect the reading provided by the transducer of the position sensor **1** in order to determine the exact position of the slider **3** of the position sensor **1.** The gaging device or position sensor **1** and the corresponding gaging unit **6,** taken as a whole, form a gaging station.

The electrical connector **5** also includes a digital memory **7,** which can be read by the gaging unit **6.** Preferably, the digital memory **7** is fixed to the connector **5** in a permanent way (that is, the former is integrated in the connector **5** in a non-separable way). The electrical connector **5** includes a pair of feed terminals for feeding the position sensor **1** with an alternating feed voltage, a pair of analogue terminals providing an alternating electrical signal which has a variable intensity voltage and depends on the position of the movable slider **3,** and a pair of digital terminals that can be used for reading the content of the digital memory **7.** Obviously, the three pairs of terminals can share a single earth terminal, and thus there can be just four different terminals. According to different embodiments herein not illustrated, the digital memory **7** can be permanently connected to the casing or to another part of the sensor **1,** and/or it can include a wireless communication device, based for example on the transponder technology, for enabling to communicate with the gaging unit **6;** in this latter embodiment the digital terminals can be obviously omitted.

The gaging unit **6** is adapted for determining a value of a thermal compensation coefficient **K** as a function of both the current temperature **T** of the position sensor **1** and the reading **X** of the position sensor **1** (that is, of the position of the slider **3** of the position sensor **1**). In order to perform a correct reading of the position of the slider **3** of the position sensor **1,** the gaging unit **6** detects the reading **X** of the position sensor **1,** detects the current temperature **T** of the position sensor **1,** determines a current value of the thermal compensation coefficient **K** and compensates the reading **X** of the position sensor **1** by applying the current value of the thermal compensation coefficient **K.** It is important to point out that the thermal compensation coefficient **K** can be of the additive type, which means that it can be algebraically added to the reading **X** of the position sensor **1,** or it can be of the multiplicative type, which means that the reading **X** of the position sensor **1** can be multiplied by it.

According to a preferred embodiment, the gaging unit **6** detects the current temperature **T** of the position sensor **1** as a function of the current electrical resistance of the electric circuit **4** of the transducer of the position sensor **1;** in other words, the gaging unit **6** feeds the electric circuit **4** of the transducer of the position sensor **1** with a direct feed voltage which enables to determine a value of the current electrical resistance of the electric circuit **4** and does not affect in any way the alternating electrical signal which has a variable intensity voltage depending on the position of the movable slider **3.**

The digital memory **7** stores a table **9** of the compensation coefficient **K** including a plurality of triads of values, each of them providing the value of the compensation coefficient **K** at a determined value of the temperature **T** of the position sensor **1** and at a determined value of the reading **X** of the position sensor **1.** According to a possible embodiment, the table **9** of the compensation coefficient **K** includes twenty determined triads of values each triad indicating the value of the compensation coefficient **K** in correspondence of one out of four different values of temperature **T** of the position sensor **1** (typically 10°C, 20°C, 30°C, and 40°C) and of one out of five different values of the reading **X** of the position sensor **1.** The five different values of the reading **X** of the position sensor **1** correspond to two end positions of the position sensor **1,** to a central position of the position sensor **1,** and to two intermediate positions of the position sensor **1,** each of the latter being comprised between the central position of the position sensor **1** and a respective end position of the position sensor **1.**

When the current temperature **T** of the position sensor **1** is comprised between two adjacent values in the table **9,** and/or the current reading **X** of the position sensor **1** is comprised between two adjacent values in the table **9,** a mathematical interpolation operation is carried out (for example using Lagrange polynomials) for calculating the value of the corresponding compensation coefficient **K.**

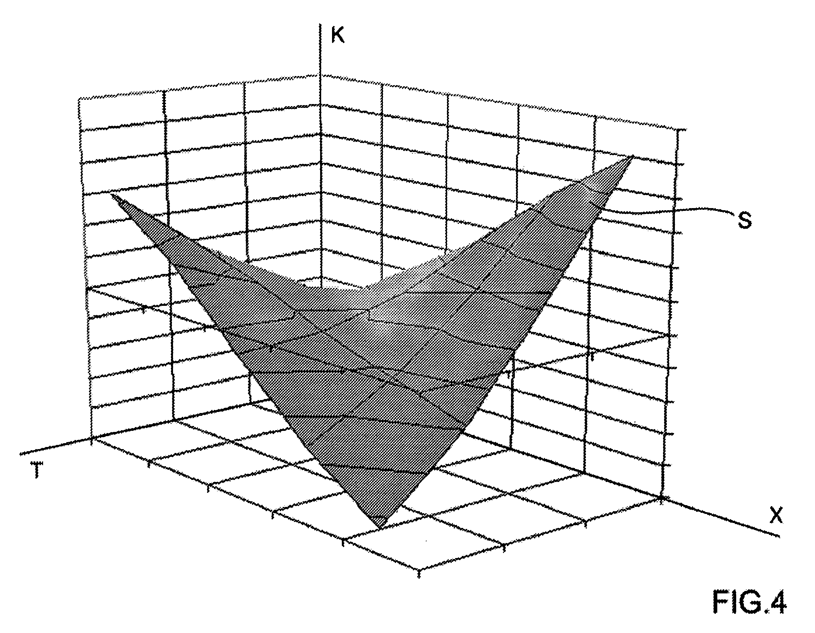

In the graph of figure 4, the triads of values of the table **9** correspond to the points of a surface **S** enabling to identify the compensation coefficient **K** to be used for thermally compensating a certain reading **X** of the position sensor **1** at a certain temperature **T.**

The table **9** of the compensation coefficient **K** can be generated for each position sensor **1.** In this way, the values of the compensation coefficients **K** included in the table **9** are more accurate, since they take into consideration all the specific features of the single position sensor **1,** but the downside is that it is necessary to undergo each position sensor **1** to a calibration operation. As an alternative, the table **9** of the compensation coefficient **K** can be generated for a certain family of position sensors **1.** In this way it is not necessary to undergo each position sensor **1** to a specific calibration operation, but the values of the compensation coefficients **K** included in the table **9** show average values of the specific family of position sensors **1** instead of the actual values of each position sensor **1.**

According to an equivalent embodiment, the digital memory **7** does not store the values of the single triads of values of the compensation coefficients **K,** but it stores values of parameters of a function (for example a polynomial function) which interpolates the triads of values of the compensation coefficients **K.** This function is adapted to provide the value of the compensation coefficient **K** as a function of both the value of the temperature **T** of the position sensor **1** and the reading **X** of the position sensor **1.**

A calibration operation for generating the table **9** of the compensation coefficient **K** is described herebelow.

For generating the table **9** of the compensation coefficient **K,** the position sensor **1** is located in a calibration station **10** which is housed inside a climatic chamber wherein the environmental temperature can be very accurately adjusted. The calibration station **10** includes a C-shaped locking device **11** comprising an upper element **12** to which the stationary part **2** of the position sensor **1** is fixed by means of screws **13,** and a lower element **14** cooperating with the slider **3** of the position sensor **1.** In particular, the lower element **14** includes a screw **15** which is screwed through a threaded through hole **16** and forms an abutment against which a free end of the slider **3** of the position sensor **1** leans. By screwing and unscrewing the screw **15** into the hole **16,** the axial position of the screw **15** varies, and thus the relative position between the slider **3** of the sensor position **1** and the stationary part **2** varies, too.

It should be noted that the screw **15** enables to lock the position sensor **1** (that is, the slider **3** of the position sensor **1)** at a desired calibrating position.

Once the position sensor **1** has been located in the calibration station **10,** at each predetermined calibration position the readings **X** of the position sensor **1** that will be inserted in the triads of values of the table **9** of the compensation coefficient **K** are detected. More specifically, the position sensor **1** (that is, the slider **3** of the position sensor **1)** is located and locked at each predetermined calibration position which is identified by means of the reading **X** of the position sensor **1.** It is not necessary to exactly locate and lock the position sensor **1** at each predetermined calibration position (this would be a very difficult operation since an accuracy in the order of micron is required), but it is sufficient to locate and lock the position sensor **1** in a neighborhood of the predetermined calibration position. For this reason, once the position sensor **1** has been located and locked at a predetermined calibration position, the correspondent reading **X** of the position sensor **1** is subsequently detected at a known and predetermined reference temperature **T_{ref}** -as described hereinafter in more detail - for determining the actual calibration position (which is comprised in a neighborhood of the predetermined calibration position, but which exactly corresponds to the predetermined calibration position just in rare and accidental cases).

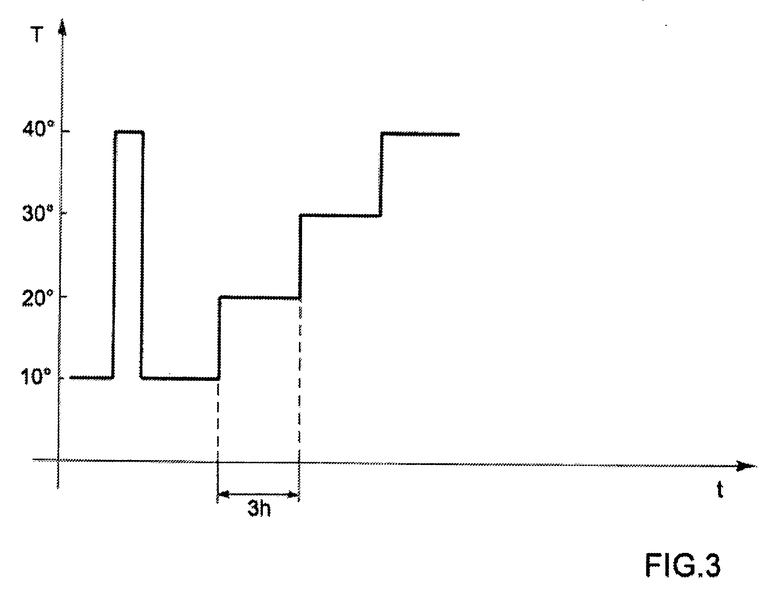

Once the position sensor **1** (that is the slider **3** of the position sensor **1)** is located and locked at one of the predetermined calibration positions, first of all the corresponding reading **X** of the position sensor **1** is detected at the temperature **T_{ref}** of the position sensor **1;** in other words, the temperature **T** of the position sensor **1** (that is the internal temperature of the climatic chamber housing the calibration station **10)** is adjusted so as to be equal to the reference temperature **T_{ref},** as already stated hereinbefore, and when the current temperature **T** of the position sensor **1** is equal to the reference temperature **T_{ref}** and is in steady state, there is detected the value of the reading **X** of the position sensor **1** at the reference temperature **T_{ref}.** Subsequently, the temperature **T** of the position sensor **1** (which means the internal temperature of the climatic chamber housing the calibration station **10)** is varied step by step so that the current temperature **T** of the position sensor **1** takes all the preset values (typically 10°C, 20°C, 30°C, and 40°C) in steady state. Figure 3 is a graph showing an example of the step-by-step time variation of the current temperature of the position sensor **1** located in the calibration station **10.** Preferably each value of the current temperature **T** of the position sensor **1** is maintained for three hours so that all the components of the position sensor **1** can be thermally settled down. At each step of the current temperature **T** of the position sensor **1** and when the current temperature **T** of the position sensor **1** is in steady state, the value of the reading **X** of the position sensor **1** is detected, and by comparing the latter with the reading **X** of the position sensor **1** at the reference temperature **T_{ref},** the value of the compensation coefficient **K** is determined. In this way there are determined the three values of the temperature **T,** the reading **X** of the position sensor **1** and the compensation coefficient **K** for generating a corresponding triad of values. More specifically, the triad of values is determined at the end of the step of the current temperature **T** of the position sensor **1,** which means when the thermal settling down of all the components of the position sensor **1** has occurred. According to a preferred embodiment of the present invention, the coefficient **K** is of the additive type, it has a mathematical sign (which means it can be a positive or a negative value) and it is calculated as the difference between the reading **X** of the position sensor **1** at the current temperature and the reading **X** of the position sensor **1** at the reference temperature **T_{ref}.**

Once the step-by-step time variation of the current temperature of the sensor position **1** has ended, the position sensor **1** (that is, the slider **3** of the position sensor **1)** is located at a new predetermined calibration position that is detected by a new reading **X** of the position sensor **1** at the reference temperature **T_{ref}** until all the predetermined calibration positions are completed. According to a preferred embodiment which is illustrated in detail in the graph of figure 3, once the position sensor **1** (that is, the slider **3** of the position sensor **1)** has been located in a calibration position, the position sensor **1** is subjected to a thermal settling cycle so that the temperature **T** of the position sensor **1** varies between the preset minimal value and the preset maximal value (which means between 10°C and 40°C). The object of said thermal settling cycle is to enable a settling of the mechanical hysteresis of all the components of the position sensor **1.** Moreover, according to a preferred embodiment, the current temperature **T** of the position sensor **1** is detected as a function of the current electrical resistance of the electric circuit **4** of the transducer of the position sensor **1.** More specifically, the electric circuit **4** of the transducer of the position sensor **1** is fed with a continuous feed voltage which enables to determine a value of the current electrical resistance of a component of the electric circuit **4.** This does not affect in any way the alternating electrical signal the intensity voltage of which can vary depending on the position of the movable slider **3.** It should be noted that the current temperature **T** of the position sensor **1** is detected as a function of the current electrical resistance of the electric circuit **4** of the transducer of the position sensor **1** during both the calibration operation for generating the table **9** of the compensation coefficient **K** and the actual working of the position sensor **1.** In this way, by using the same method and the same components for detecting the current temperature **T** of the position sensor **1,** possible systematic errors introduced during the detection of the current temperature **T** of the position sensor **1** similarly repeat during both the generation of the compensation coefficients **K** and the usage of the compensation coefficient **K,** and thus they do not affect the proper thermal compensation proceeding.

According to a different embodiment, the current temperature **T** of the position sensor **1** can be detected by means of a temperature sensor (for instance a thermistor or a thermocouple) which is separate and independent from the electric circuit **4,** and can be fixed to the stationary part **2** of the position sensor **1.**

In the above described example, the gaging device is a position sensor **1** having a feeler carried by an axially movable slider **3** and including an inductive linear transducer of the LVDT type. According to possible alternative embodiments of the invention, the gaging device can have different mechanical features and/or can include an inductive linear transducer of a different kind (for example a "Half Bridge" or HBT transducer) or a non-inductive linear transducer. As a possible mechanical alternative, a feeler can be carried by a movable element adapted to pivot about a fulcrum with respect to a stationary part, substantially as shown in the gaging head of the above mentioned patent US5689447.

The above described compensation method provides many advantages since it can be easily and cheaply implemented, and, above all, it enables to obtain a very accurate compensation which can be also applied to gaging applications requiring an extremely high accuracy.

## Claims

1. Method for thermally compensating a gaging device **(1),** the method including the following steps:
determining and storing, in the course of a calibration operation, values of a thermal compensation coefficient **(K)** upon variation of a temperature **(T)** of the gaging device (**1**);
detecting, in the course of a gaging operation, a current reading (**X**) of the gaging device **(1);**
detecting, in the course of the gaging operation, a current temperature **(T)** of the gaging device **(1);**
determining, in the course of the gaging operation, a current value of the thermal compensation coefficient **(K)** by means of said values of the thermal compensation coefficient **(K)** previously determined and stored in the course of the calibration operation; and
correcting, in the course of the gaging operation, the current reading (**X**) of the gaging device **(1)** by means of the current value of the thermal compensation coefficient **(K)**;
the compensation method being **characterized in that** it includes the further step of determining, in the course of the gaging operation, the current value of the thermal compensation coefficient (**K**) as a function of the current temperature **(T)** of the gaging device **(1)** and as a function of the current reading (**X**) of the gaging device **(1).**

2. Method according to claim 1, including the further step of generating, in the course of the calibration operation, a table **(9)** of values of the thermal compensation coefficient **(K)** which comprises a plurality of triads of values, each of said triads of values providing the value of the compensation coefficient **(K)** at a determined value of the temperature **(T)** of the gaging device **(1)** and at a determined value of the reading (**X**) of the gaging device **(1).**

3. Method according to claim 2, wherein the step of generating, in the course of the calibration operation, the table **(9)** of values of the compensation coefficient **(K)** includes the further steps of:
causing controlled variations of the temperature of the gaging device **(1);**
detecting, when the gaging device **(1)** is arranged at predetermined calibration positions, variations of the reading (**X**) of the gaging device **(1)** at predetermined temperatures **(T)** and with respect to a reference temperature (**T_{ref}**); and
employing each detected variation of the reading (**X**) of the gaging device **(1)** in order to obtain the value of the thermal compensation coefficient **(K)** associated to the corresponding reading (**X**) of the gaging device **(1)** and to the corresponding temperature **(T)** of the gaging device **(1).**

4. Compensation method according to claim 3, including the further step of defining the predetermined calibration positions of the gaging device **(1)** on the basis of the reading **(X)** of the gaging device **(1)** at the reference temperature **(T_{ref})**.

5. Method according to claim 2, 3 or 4, including the further step of storing the table **(9)** of values of the compensation coefficient **(K)** in a digital memory **(7)** of the gaging device **(1).**

6. Method according to claim 5, including the further step of arranging the digital memory **(7)** which comprises the table **(9)** of values of the compensation coefficient **(K)** within an electrical connector **(5)** of the gaging device (**1**).

7. Method according to any one of claims 2 to 6, including the further step of performing, in the course of the gaging operation, a mathematical interpolation operation for calculating the current value of the compensation coefficient **(K),** when the current temperature **(T)** of the gaging device **(1)** is comprised between two adjacent values in said table **(9),** and/or the current reading (**X**) of the gaging device **(1)** is comprised between two adjacent values in said table **(9).**

8. Method according to any one of claims 2 to 7, wherein the step of generating, in the course of the calibration operation, the table **(9)** of values of the compensation coefficient **(K)** includes the further steps of:
defining at least two predetermined calibration positions;
placing and locking the gaging device **(1)** at each predetermined calibration position;
varying the temperature **(T)** of the gaging device **(1)** step by step in such a way that the current temperature **(T)** of the gaging device **(1)** takes all the preset values in steady state; and
determining the value of the current temperature **(T)** of the gaging device **(1),** the value of the current reading (**X**) of the gaging device **(1),** and the value of the compensation coefficient **(K)** in order to generate a corresponding triad of values when the temperature **(T)** of the gaging device **(1)** is in steady state.

9. Method according to claim 8, wherein the step of generating, in the course of the calibration operation, the table **(9)** of values of the compensation coefficient **(K)** includes the further step of subjecting, once the gaging device **(1)** has been arranged at one of said predetermined calibration positions, the gaging device **(1)** to a thermal settling cycle in which the temperature **(T)** of the gaging device **(1)** is varied between a preset minimum value and a preset maximum value.

10. Method according to claim 8 or 9, in the gaging device **(1)** including a transducer, wherein the step of determining, in the course of the calibration operation, the value of the current temperature **(T)** of the gaging device **(1)** includes the further steps of:
determining a current electrical resistance of an electric circuit **(4)** of the transducer of the gaging device **(1);** and
determining said value of the current temperature **(T)** of the gaging device **(1)** as a function of the current electrical resistance of the electric circuit **(4)** of the transducer of the gaging device **(1).**

11. Method according to claim 10, wherein the step of detecting, in the course of the gaging operation, a current temperature **(T)** of the gaging device **(1)** includes the further steps of:
determining a current electrical resistance of an electric circuit **(4)** of the transducer of the gaging device (**1**); and
determining said current temperature **(T)** of the gaging device **(1)** as a function of the current electrical resistance of the electric circuit **(4)** of the transducer of the gaging device **(1).**

12. Thermally compensated gaging station including:
a gaging device **(1)** with a stationary part **(2),** a movable element **(3)** and a a transducer that is adapted to provide an electrical signal depending on the position of the movable element **(3);**
a gaging unit **(6)** for detecting, in the course of a gaging operation, a current reading (**X**) of the gaging device **(1)** and a current temperature **(T)** of the gaging device **(1),** for determining, in the course of the gaging operation, a current value of a thermal compensation coefficient **(K)** by utilizing values of the thermal compensation coefficient **(K)** previously determined and stored in the course of a calibration operation, and for correcting, in the course of the gaging operation, the current reading (**X**) of the gaging device **(1)** by means of the current value of the thermal compensation coefficient **(K) ;**
the gaging station being **characterized in that** the gaging unit **(6)** determines, in the course of the gaging operation, the current value of the thermal compensation coefficient **(K)** as a function of the current temperature **(T)** of the gaging device **(1)** and as a function of the current reading (**X**) of the gaging device **(1).**

13. Gaging station according to claim 12, further including a digital memory **(7)** which stores a table **(9)** of values of the compensation coefficient **(K)** including a plurality of triads of values, each of them providing the value of the compensation coefficient **(K)** at a determined value of the temperature **(T)** of the gaging device **(1)** and at a determined value of the reading **(X)** of the gaging device **(1).**

14. Gaging station according to claim 13, wherein said digital memory **(7)** is arranged in an electrical connector **(5)** of the gaging device **(1).**

15. Gaging station according to claim 12, 13 or 14, wherein the gaging unit **(6)** determines, in the course of the gaging operation, the current temperature **(T)** of the gaging device **(1)** as a function of the current electrical resistance of an electric circuit **(4)** of the transducer of the gaging device **(1).**

16. Gaging station according to any one of claims from 12 to 15, wherein said movable element of the gaging device **(1)** is a slider **(3)** that is axially movable with respect to the stationary part **(2).**

## Patentansprüche

1. Verfahren zur thermischen Kompensierung einer Messvorrichtung **(1),** wobei das Verfahren die folgenden Schritte umfasst:
- Bestimmung und Abspeicherung der Werte eines thermischen Kompensierungskoeffizienten **(K)** bei Variation einer Temperatur **(T)** der Messvorrichtung **(1)** während des Kalibrierungsvorgangs;
- Erfassung einer aktuellen Messung (**X**) der Messvorrichtung **(1)** während des Messvorgangs;
- Erfassung einer aktuellen Temperatur **(T)** der Messvorrichtung **(1)** während des Messvorgangs;
- Bestimmung eines aktuellen Werts des thermischen Kompensierungskoeffizienten **(K),** während des Messvorgangs, durch die besagten Werte des thermischen Kompensierungskoeffizienten **(K),** die zuvor während des Kalibrierungsvorgangs bestimmt und abgespeichert worden sind; und
- Korrektur der aktuellen Messung (**X**) der Messvorrichtung **(1)** durch den aktuellen Wert des thermischen Kompensierungskoeffizienten **(K)** während des Messvorgangs;
**dadurch gekennzeichnet, dass** das Kompensierungsverfahren einen weiteren Schritt von Bestimmung des aktuellen Werts des thermischen Kompensierungskoeffizienten (K) in Abhängigkeit von der aktuellen Temperatur **(T)** der Messvorrichtung **(1)** und in Abhängigkeit von der aktuellen Messung (**X**) der Messvorrichtung **(1)** während des Messvorgangs umfasst.

2. Verfahren gemäß Anspruch 1, einschließlich des weiteren Schrittes von Erstellung während des Kalibrierungsvorgangs einer Tabelle **(9)** von Werten des thermischen Kalibrierungskoeffizienten **(K),** die eine Vielzahl von Wertetriaden umfasst, wobei jede der besagten Wertetriaden den Wert des Kompensierungskoeffizienten **(K)** bei einem bestimmten Temperaturwert **(T)** der Messvorrichtung **(1)** und einen bestimmten Messung (**X**) der Messvorrichtung **(1)** aufweist.

3. Verfahren gemäß Anspruch 2, wobei der Schritt von Erstellung der Tabelle **(9)** der Werte des Kompensierungskoeffizienten **(K)** während des Kalibrierungsvorgangs weitere Schritte umfasst:
- Bewirkung von kontrollierten Variationen der Temperatur der Messvorrichtung **(1);**
- Erfassung, bei Messvorrichtung **(1)** in vorbestimmten Kalibrierungspositionen, von Variationen der Messung (**X**) der Messvorrichtung **(1)** bei vorbestimmten Temperatur **(T)** und mit Bezug auf eine Referenztemperatur (**Tref**);
- Verwendung von jeder erfassten Variation der Messung (**X**) der Messvorrichtung **(1)** zur Erzielung des Werts des thermischen Kompensierungskoeffizienten **(K),** der der entsprechenden Messung (**X**) der Messvorrichtung **(1)** und der entsprechenden Temperatur **(T)** der Messvorrichtung **(1)** zugeordnet ist.

4. Kompensierungsverfahren gemäß Anspruch 3, einschließlich des weiteren Schritts von Bestimmung der vorbestimmten Kalibrierungspositionen der Messvorrichtung **(1)** auf Grundlage der Messung (**X**) der Messvorrichtung **(1)** bei der Referenztemperatur (**Tref**).

5. Verfahren gemäß Anspruch 2, 3 oder 4, einschließlich des weiteren Schritts von Abspeicherung der Tabelle **(9)** der Werte des Kompensierungskoeffizienten **(K)** in einem digitalen Speicher **(7)** der Messvorrichtung **(1).**

6. Verfahren gemäß Anspruch 5, einschließlich des weiteren Schritts von Anordnung des digitalen Speichers **(7),** der die Tabelle **(9)** der Werte des Kompensierungskoeffizienten **(K)** umfasst, in einer elektrischen Steckverbindung **(5)** der Messvorrichtung **(1).**

7. Verfahren gemäß einem der Ansprüche 2 bis 6, einschließlich des weiteren Schritts von Durchführung einer mathematischen Interpolation zur Berechnung des aktuellen Werts des Kompensierungskoeffizienten **(K)** während des Messvorgangs, wenn die aktuelle Temperatur **(T)** der Messvorrichtung **(1)** zwischen zwei angrenzenden Werten in der besagten Tabelle **(9)** liegt und/oder die aktuelle Messung (**X**) der Messvorrichtung **(1)** zwischen zwei angrenzenden Werten in der besagten Tabelle **(9)** liegt.

8. Verfahren gemäß einem der Ansprüche von 2 bis 7, wobei der Schritt von Erstellung der Tabelle **(9)** der Werte des Kompensierungskoeffizienten **(K)** während des Kalibrierungsvorgangs die weiteren Schritte umfasst:
- Bestimmung von zumindest zwei Kalibrierungspositionen;
- Positionierung und Blockierung der Messvorrichtung **(1)** in jeder der vorbestimmten Kalibrierungspositionen;
- Variation der Temperatur **(T)** der Messvorrichtung **(1)** Schritt für Schritt, so dass die aktuelle Temperatur **(T)** der Messvorrichtung **(1)** alle voreingestellten Werte stationär annimmt; und
- Bestimmung des Werts der aktuellen Temperatur **(T)** der Messvorrichtung **(1),** des Werts der aktuellen Messung (**X**) der Messvorrichtung **(1)** und des Werts des Kompensierungskoeffizienten **(K)** zur Erstellung einer entsprechenden Triade von Werten, wenn die Temperatur **(T)** der Messvorrichtung (1) stationär ist.

9. Verfahren gemäß Anspruch 8, wobei der Schritt von Erstellung der Tabelle **(9)** von Werten des Kompensierungskoeffizienten **(K)** während des Kalibrierungsverfahrens den weiteren Schritt umfasst, die Messvorrichtung **(1)** einem thermischen Stabilisierungszyklus auszusetzen, in dem die Temperatur **(T)** der Messvorrichtung **(1)** zwischen einem voreingestellten Mindestwert und einem voreingestellten Höchstwert variiert wird, nachdem die Messvorrichtung **(1)** in einer der besagten vorbestimmten Kalibrierungspositionen positioniert wurden ist.

10. Verfahren gemäß Anspruch 8 oder 9, **gekennzeichnet durch** die Tatsache, dass die Messvorrichtung **(1)** einen Wandler umfasst, wobei der Schritt von Bestimmung des Werts der aktuellen Temperatur **(T)** der Messvorrichtung (**1**) während des Kalibrierungsvorgangs die weiteren Schritte umfasst:
- Bestimmung eines aktuellen elektrischen Widerstands einer elektrischen Schaltung **(4)** des Wandlers der Messvorrichtung **(1);** und
- Bestimmung des besagten Werts der aktuellen Temperatur **(T)** der Messvorrichtung **(1)** in Abhängigkeit vom aktuellen elektrischen Widerstand der elektrischen Schaltung **(4)** des Wandlers der Messvorrichtung **(1).**

11. Verfahren gemäß Anspruch 10, wobei der Schritt von Bestimmung einer aktuellen Temperatur **(T)** der Messvorrichtung **(1)** während des Messvorgangs die weiteren Schritte umfasst:
- Bestimmung eines aktuellen elektrischen Widerstands einer elektrischen Schaltung **(4)** des Wandlers der Messvorrichtung **(1);** und
- Bestimmung der besagten aktuellen Temperatur **(T)** der Messvorrichtung **(1)** in Abhängigkeit vom aktuellen elektrischen Widerstand der elektrischen Schaltung **(4)** des Wandlers der Messvorrichtung **(1).**

12. Thermisch kompensierte Messstation, einschließlich:
- einer Messvorrichtung (1) mit einem feststehenden Bauteil **(2)**, einem beweglichen Element **(3)** und einem Wandler, der ein elektrisches Signal in Abhängigkeit von der Position des beweglichen Elements **(3)** liefert;
- eine Messeinheit **(6)** zur Erfassung einer aktuellen Messung **(X)** der Messvorrichtung **(1)** und einer aktuellen Temperatur **(T)** der Messvorrichtung **(1)** während des Messvorgangs zur Bestimmung eines aktuellen Werts eines thermischen Kompensierungskoeffizienten **(K)** während des Messvorgangs durch Nutzung von Werten des thermischen Kompensierungskoeffizienten **(K),** die zuvor während eines Kalibrierungsvorgangs bestimmt und abgespeichert worden sind, sowie zur Korrektur der aktuellen Messung (**X**) der Messvorrichtung **(1)** während des Messvorgangs durch den aktuellen Wert des thermischen Kompensierungskoeffizienten **(K);**
**dadurch gekennzeichnet, dass** die Messeinheit **(6)** während des Messvorgangs den aktuellen Werts des thermischen Kompensierungskoeffizienten **(K)** in Abhängigkeit von der aktuellen Temperatur **(T)** der Messvorrichtung **(1)** und in Abhängigkeit von der aktuellen Messung (**X**) der Messvorrichtung **(1)** bestimmt.

13. Messstation gemäß Anspruch 12, außerdem einschließlich eines digitalen Speichers **(7)** zur Abspeicherung einer Tabelle **(9)** von Werten des Kompensierungskoeffizienten **(K),** einschließlich einer Vielzahl von Triaden von Werten, die jeweils den Wert des Kompensierungskoeffizienten **(K)** bei einem bestimmten Wert der Temperatur **(T)** der Messvorrichtung **(1)** und einem bestimmten Wert der Messung (**X**) der Messvorrichtung **(1)** liefern.

14. Messstation gemäß Anspruch 13, wobei sich der besagte digitale Speicher **(7)** in einer elektrischen Steckverbindung (5) der Messvorrichtung **(1)** befindet.

15. Messstation gemäß Anspruch 12, 13 oder 14, wobei die Messeinheit **(6)** während des Messvorgangs die aktuelle Temperatur **(T)** der Messvorrichtung **(1)** in Abhängigkeit vom aktuellen elektrischen Widerstand einer elektrischen Schaltung **(4)** des Wandlers der Messvorrichtung **(1)** bestimmt.

16. Messstation gemäß einem der Ansprüche von 12 bis 15, wobei das besagte bewegliche Element der Messvorrichtung **(1)** ein Schieber **(3)** ist, der mit Bezug auf das feststehende Bauteil **(2)** in axialer Richtung bewegt werden kann.

## Revendications

1. Un procédé de compensation thermique d' un dispositif de mesure **(1),** ledit procédé comprenant les phases suivantes :
déterminer et mémoriser, au cours d'une opération d'étalonnage, des valeurs d'un coefficient de compensation thermique **(K)** lors d'une variation d'une température **(T)** du dispositif de mesure (**1**) ;
détecter, au cours d'une opération de mesure, une lecture courante (**X**) du dispositif de mesure **(1) ;**
détecter, au cours de l'opération de mesure, une température courante **(T)** du dispositif de mesure **(1) ;**
déterminer, au cours de l'opération de mesure, une valeur courante du coefficient de compensation thermique **(K)** à l'aide desdites valeurs du coefficient de compensation thermique **(K)** précédemment déterminées et mémorisées au cours de l'opération d'étalonnage; et
corriger, au cours de l'opération de mesure, la lecture courante (**X**) du dispositif de mesure **(1)** à l'aide de la valeur courante du coefficient de compensation thermique **(K) ;**
le procédé de compensation étant **caractérisé en ce qu'**il comprend l'autre phase consistant à déterminer, au cours de l'opération de mesure, la valeur courante du coefficient de compensation thermique **(K)** en fonction de la température courante **(T)** du dispositif de mesure **(1)** et en fonction de la lecture courante (**X**) du dispositif de mesure **(1).**

2. Le procédé selon la revendication 1, comprenant l'autre phase consistant à générer, au cours de l'opération d'étalonnage, une table **(9)** de valeurs du coefficient de compensation thermique **(K)** qui contient une pluralité de triades de valeurs, chacune desdites triades de valeurs fournissant la valeur du coefficient de compensation **(K)** à une valeur définie de la température **(T)** du dispositif de mesure **(1)** et à une valeur définie de la lecture (**X**) du dispositif de mesure **(1).**

3. Le procédé selon la revendication 2, dans lequel la phase consistant à générer, au cours de l'opération d'étalonnage, la table **(9)** de valeurs du coefficient de compensation **(K)** comprend les autres phases consistant à :
causer des variations contrôlées de la température du dispositif de mesure **(1) ;**
détecter, quand le dispositif de mesure **(1)** est placé dans des positions d'étalonnage prédéfinies, des variations de la lecture (**X**) du dispositif de mesure **(1)** à des températures prédéfinies **(T)** et par rapport à une température de référence **(T_{ref})** ; et
utiliser chaque variation détectée de la lecture **(X)** du dispositif de mesure **(1)** de manière à obtenir la valeur du coefficient de compensation thermique **(K)** associée à la lecture correspondante (**X**) du dispositif de mesure **(1)** et à la température correspondante **(T)** du dispositif de mesure **(1)**.

4. Le procédé de compensation selon la revendication 3, comprenant l'autre phase consistant à définir les positions d'étalonnage prédéfinies du dispositif de mesure **(1)** sur la base de la lecture (**X**) du dispositif de mesure **(1)** à la température de référence (**T_{ref}**).

5. Le procédé selon la revendication 2, 3 ou 4, comprenant l'autre phase consistant à mémoriser la table **(9)** de valeurs du coefficient de compensation **(K)** dans une mémoire numérique **(7)** du dispositif de mesure **(1).**

6. Le procédé selon la revendication 5, comprenant l'autre phase consistant à placer la mémoire numérique **(7),** qui contient la table **(9)** de valeurs du coefficient de compensation **(K),** dans un connecteur électrique **(5)** du dispositif de mesure **(1).**

7. Le procédé selon l'une quelconque des revendications de 2 à 6, comprenant l'autre phase consistant à effectuer, au cours de l'opération de mesure, une opération d'interpolation mathématique pour calculer la valeur courante du coefficient de compensation **(K),** quand la température courante **(T)** du dispositif de mesure **(1)** est comprise entre deux valeurs adjacentes de ladite table **(9),** et/ou la lecture courante (**X**) du dispositif de mesure **(1)** est comprise entre deux valeurs adjacentes de ladite table **(9).**

8. Le procédé selon l'une quelconque des revendications de 2 à 7, dans lequel la phase consistant à générer, au cours de l'opération d'étalonnage, la table **(9)** de valeurs du coefficient de compensation **(K)** comprend les autres phases consistant à :
définir au moins deux positions d'étalonnage prédéfinies ;
placer et bloquer le dispositif de mesure **(1)** au niveau de chaque position d'étalonnage prédéfinie ;
faire varier la température **(T)** du dispositif de mesure **(1)** pas à pas de manière à ce que la température courante **(T)** du dispositif de mesure **(1)** prenne toutes les valeurs préréglées en régime permanent ; et
déterminer la valeur de la température courante **(T)** du dispositif de mesure **(1),** la valeur de la lecture courante (**X**) du dispositif de mesure **(1),** et la valeur du coefficient de compensation **(K)** de manière à générer une triade de valeurs correspondante quand la température **(T)** du dispositif de mesure **(1)** est en régime permanent.

9. Le procédé selon la revendication 8, dans lequel la phase consistant à générer, au cours de l'opération d'étalonnage, la table **(9)** de valeurs du coefficient de compensation **(K)** comprend l'autre phase consistant à soumettre, une fois que le dispositif de mesure **(1)** a été placé dans une desdites positions d'étalonnage prédéfinies, le dispositif de mesure **(1)** à un cycle d'ajustement thermique dans lequel la température **(T)** du dispositif de mesure **(1)** varie entre une valeur préréglée minimum et une valeur préréglée maximum.

10. Le procédé selon la revendication 8 ou 9, dans le dispositif de mesure **(1)** comprenant un transducteur, dans lequel la phase consistant à déterminer, au cours de l'opération d'étalonnage, la valeur de la température courante **(T)** du dispositif de mesure **(1)** comprend les autres phases consistant à :
déterminer une résistance électrique courante d'un circuit électrique **(4)** du transducteur du dispositif de mesure **(1) ;** et
déterminer ladite valeur de la température courante **(T)** du dispositif de mesure **(1)** en fonction de la résistance électrique courante du circuit électrique **(4)** du transducteur du dispositif de mesure **(1).**

11. Le procédé selon la revendication 10, dans lequel la phase consistant à détecter, au cours de l'opération de mesure, une température courante **(T)** du dispositif de mesure **(1)** comprend les autres phases consistant à :
déterminer une résistance électrique courante d'un circuit électrique **(4)** du transducteur du dispositif de mesure (**1**) ; et
déterminer ladite température courante **(T)** du dispositif de mesure **(1)** en fonction de la résistance électrique courante du circuit électrique **(4)** du transducteur du dispositif de mesure **(1).**

12. Un poste de mesure à compensation thermique comprenant :
un dispositif de mesure **(1)** avec une partie fixe **(2),** un élément mobile **(3)** et un transducteur qui est destiné à fournir un signal électrique dépendant de la position de l'élément mobile **(3) ;**
une unité de mesure **(6)** pour détecter, au cours d'une opération de mesure, une lecture courante (**X**) du dispositif de mesure **(1)** et une température courante **(T)** du dispositif de mesure **(1),** pour déterminer, au cours de l'opération de mesure, une valeur courante d'un coefficient de compensation thermique **(K)** en utilisant des valeurs du coefficient de compensation thermique **(K)** précédemment déterminées et mémorisées au cours d'une opération d'étalonnage, et pour corriger, au cours de l'opération de mesure, la lecture courante (**X**) du dispositif de mesure **(1)** à l'aide de la valeur courante du coefficient de compensation thermique **(K) ;**
le poste de mesure étant **caractérisé en ce que** l'unité de mesure **(6)** détermine, au cours de l'opération de mesure, la valeur courante du coefficient de compensation thermique **(K)** en fonction de la température courante **(T)** du dispositif de mesure **(1)** et en fonction de la lecture courante (**X**) du dispositif de mesure **(1).**

13. Le poste de mesure selon la revendication 12, comprenant en outre une mémoire numérique **(7)** qui mémorise une table **(9)** de valeurs du coefficient de compensation **(K)** contenant une pluralité de triades de valeurs, chacune desquelles fournissant la valeur du coefficient de compensation **(K)** à une valeur définie de la température **(T)** du dispositif de mesure **(1)** et à une valeur définie de la lecture (**X**) du dispositif de mesure **(1).**

14. Le poste de mesure selon la revendication 13, dans lequel ladite mémoire numérique **(7)** est placée dans un connecteur électrique **(5)** du dispositif de mesure **(1).**

15. Le poste de mesure selon la revendication 12, 13 ou 14, dans lequel l'unité de mesure **(6)** détermine, au cours de l'opération de mesure, la température courante **(T)** du dispositif de mesure **(1)** en fonction de la résistance électrique courante d'un circuit électrique **(4)** du transducteur du dispositif de mesure **(1).**

16. Le poste de mesure selon l'une quelconque des revendications de 12 à 15, dans lequel ledit élément mobile du dispositif de mesure **(1)** est un curseur **(3)** qui est axialement mobile par rapport à la partie fixe **(2).**
